# EUROPÄISCHE PATENTSCHRIFT

(11) **EP 0 721 405 B1**
(45) Veröffentlichungstag und Bekanntmachung des Hinweises auf die Patenterteilung: **22.03.2000**
(21) Anmeldenummer: 95927719.5
(22) Anmeldetag: 25.07.1995
(51) Int. Cl.: B60Q 1/30

(54) **IM INNENRAUM EINES FAHRZEUGES ANBRINGBARE FAHRZEUGLEUCHTE, INSBESONDERE EINE HOCHSETZBARE ZUSATZ-BREMSLEUCHTE**
VEHICLE LIGHT CAPABLE OF BEING ARRANGED IN THE INTERIOR SPACE OF A VEHICLE, IN PARTICULAR ADDITIONAL STOP LIGHT CAPABLE OF BEING PLACED IN A RAISED POSITION
ECLAIRAGE, EN PARTICULIER FEU STOP AUXILIAIRE SURELEVE, POUVANT ETRE MONTE A L'INTERIEUR D'UN VEHICULE

(30) Priorität: 03.08.1994 DE 4427434
(43) Veröffentlichungstag der Anmeldung: 17.07.1996
(73) Patentinhaber: Hella KG Hueck & Co., 59552 Lippstadt (DE)
(72) Erfinder: ROGGE, Ingo, D-59557 Lippstadt (DE)
(86) Internationale Anmeldenummer: EP9502933
(87) Internationale Veröffentlichungsnummer: WO9604151

(56) Entgegenhaltungen:
- EP-A- 0 565 438
- DE-A- 3 017 405
- US-A- 4 654 757

## Beschreibung

Die vorliegende Erfindung betrifft eine Fahrzeugleuchte, insbesondere eine hochsetzbare Zusatz-Bremsleuchte, mit einem Gehäuse, an dem ein transparenter Lichtkörper festgelegt ist und welches mit einer Lichtquelle, gegebenenfalls einem Reflektor sowie elektrischen Anschlußelementen bestückt ist, wobei auf das Gehäuse eine abnehmbare Abdeckkappe gestülpt ist, deren Außenfläche - bezogen auf die Einbaulage der Fahrzeugleuchte - eine Sichtfläche bildet, daß außenseitig an Seitenteilen des Gehäuses federnde Rastzungen angeformt sind, die von Raststegen hintergriffen sind.

Eine solche Fahrzeugleuchte ist aus der EP 0 565 438 B1 bekanntgeworden. Die Fahrzeugleuchte weist ein Gehäuse mit einer Lichtquelle auf. An dem vorderen Rand des Gehäuses sind federnde Rastzungen mit nach innen gerichteten Rastnasen angebracht. Die Rastnasen sind von Raststegen der das Gehäuse abdeckenden Lichtscheibe hintergriffen. Auf das Gehäuse ist eine Abdeckkappe gestülpt, die mit ihrer unteren Kante an der Hutablage des Fahrzeugs befestigbar ist.

Bei einer aus dem deutschen Gebrauchsmuster 77 39 340 bekannten Fahrzeugleuchte sind an dem Gehäuse Federzungen angesetzt, die im Inneren des kastenartigen Lichtkörpers verlaufen. Die nach außen gerichteten Vorsprünge greifen in Öffnungen des Lichtkörpers ein. Die Entriegelung zwischen dem Gehäuse und dem Lichtkörper erfolgt durch Druck von außen auf die Vorsprünge der Federzungen. Zur Entriegelung sind bei der vorbekannten Fahrzeugleuchte zwar keine Werkzeuge notwendig, jedoch würden bei einer Anbringung im Fahrzeug-Innenraum die sichtbaren Vorsprünge der Federlaschen sehr störend wirken. Außerdem müßte das Gehäuse in vielen Farben gefertigt werden, da es ebenfalls sehr störend wirken würde, wenn für alle möglichen Farben der Innenräume einer Fahrzeugbaureihe nur Fahrzeugleuchten in einer Farbe zur Verfügung stehen würden. Außerdem ist es unvermeidbar, daß elektrische Kontaktelemente sichtbar sind.

Aus der DE 41 37 612 C1 ist eine außen an einem Fahrzeug anbringbare Kennzeichenleuchte mit einem Gehäuse bekannt, welches aus einem Gehäuseoberteil und einem Gehäuseunterteil besteht, die miteinander verrastet sind. In den kürzeren Seitenwänden des Gehäuseoberteils sind zwei vertikale, parallel und im Abstand zueinander verlaufende Schlitze zur Bildung von Zungen vorgesehen, die an den freien Enden mit Verrastungsmitteln versehen sind, die mit entsprechenden Verrastungsmitteln des Gehäuseunterteils verbunden sind. Auch bei dieser Leuchte sind die Verrastungsmittel von außen sichtbar. Bei einem Einbau im Innenraum wäre auch zur farblichen Anpassung an den Innenraum die Leuchte in vielen Farben herzustellen. Darüber hinaus wären auch bei dieser Leuchte elektrische Kontaktelemente sichtbar.

Schließlich ist noch aus dem deutschen Gebrauchsmuster 83 03 898 eine Befestigungsanordnung für Scheinwerfer von Kraftfahrzeugen bekannt, bei der an einem Gehäuse aus einem elastischen Material ein abstehender Bügel und ein mit einem Haken versehener, zungenförmiger Lappen angeformt ist. Der Rand des Reflektors weist eine Schulter auf, wodurch dieser nach Art einer Klammer festgehalten wird, da der Haken sich an der Schulter abstützt. Die Ausbildung der Leuchte ist dieser Druckschrift nicht zu entnehmen. Es soll durch die Befestigungsanordnung erreicht werden, daß der Reflektorrand klammerartig am Gehäuse festgehalten wird und der Reflektor funktionsgerecht durch Rastung positioniert wird.

Ausgehend von einer durch das deutsche Gebrauchsmuster 77 39 340 bekannten Fahrzeugleuchte liegt der Erfindung die Aufgabe zugrunde, eine im Innenraum eines Fahrzeuges anzubringende Fahrzeugleuchte mit den Merkmalen des Oberbegriffs des Anspruchs 1 so zu gestalten, daß die noch sichtbare Fläche der Fahrzeugleuchte nach der Montage an die Ausstattungsfarbe des Fahrzeug-Innenraumes in einfacher Weise angepaßt werden kann, wobei für alle Ausstattungsfarben farblich gleiche Gehäuse verwendbar sind. Darüber hinaus soll die sichtbare Fläche glattflächig sein und es sollen weder elektrische Kontaktelemente noch Rastmittel sichtbar sein.

Diese Aufgabe wird dadurch gelöst, daß die federnden Rastzungen des Gehäuses nach außen gerichtete Rastnasen aufweisen und die Raststege an die Innenseite der Abdeckkappe angeformt sind und daß die Abdeckkappe in den den Rastzungen zugeordneten Bereichen jeweils eine Entriegelungslasche aufweist,
- die durch einen bogenförmigen Schlitz der Abdeckkappe gebildet ist,
- die um eine Achse biegbar ist, zwischen der und einer Biegeachse der federnden Rastzungen die Rastnasen und die Raststege angeordnet sind und
- durch die bei einem Druck von außen die Rastnasen der federnden Rastzungen außer Eingriff mit den Raststegen gelangen.

Durch die abnehmbare Abdeckkappe ist es nunmehr möglich, daß das Gehäuse für alle Ausstattungsfarben in der gleichen Farbe hergestellt wird. Zur farblichen Anpassung braucht lediglich die Abdeckkappe in den erforderlichen Farben gefertigt werden. Dadurch wird es außerdem möglich, das Gehäuse und die Abdeckkappe aus unterschiedlichen Kunststoffen zu fertigen. Die Abdeckkappe läßt sich so gestalten, daß die äußere Sichtfläche glattflächig ist und daß alle am Gehäuse angeordneten Bauteile unsichtbar sind. Das Abnehmen der Abdeckkappe vom Gehäuse erfolgt in einfachster Weise, obwohl die Rast- und/oder Verriegelungselemente unsichtbar sind, da die Entriegelungslaschen beispielsweise mit dem Daumen und einem Finger einer Hand aufeinander zubewegt werden müssen. Die Rastzungen stehen bei aufgestülpter Abdeckkappe so zu den Entriegelungslaschen, daß sie sich entweder kontaktieren oder in einem geringen Abstand zueinander stehen, so daß die Biegewinkel der Entriegelungslaschen klein gehalten werden. Die erfindungsgemäße Fahrzeugleuchte in Form einer Bremsleuchte wird normalerweise auf der Hutablage im Heck eines Personenkraftwagens so montiert, daß der Lichtkörper in einem geringen Abstand zur Innenfläche der Heckscheibe steht. Das Abnehmen der Abdeckkappe erfolgt ohne Werkzeuge, da mittels der Entriegelungslaschen die federnden Rastzungen aufeinander zubewegt werden. Wären die Raststege an die Innenseite der Entriegelungslaschen so angesetzt, daß sie die Rastnasen der federnden Rastzungen hintergreifen würden, müßten zur Abnahme der Abdeckkappe entweder die Entriegelungszungen nach außen oder die Rastzungen nach innen gedrückt werden. Dazu wären dann Werkzeuge notwendig. Da die Entriegelungslaschen eine gleichbleibende Dicke haben, können keine Einfallstellen an der Innenseite durch eine Materialhäufung entstehen.

Bei der Fahrzeugleuchte ist es vorteilhaft, daß jede Entriegelungslasche durch einen in einem Bogen verlaufenden Schlitz gebildet ist. Selbst wenn die Breite des Schlitzes sehr gering ist, kann man zwecks Demontage der Abdeckkappe sofort erkennen, an welcher Stelle die Kräfte aufgebracht werden müssen. Naturgemäß werden die Kräfte auf die freien Enden der Entriegelungslaschen aufgebracht. Die Biegelinien der Entriegelungslaschen werden durch die beiden Enden der in Bögen verlaufenden Schlitze definiert. Die Schlitze können in vorteilhafter und wirtschaftlicher Weise durch eine entsprechende Auslegung des Werkzeuges beim Spritzvorgang erstellt werden. Zweckmäßigerweise ist der Lichtköper als Lichtscheibe ausgebildet, wobei der angrenzende Rand des Gehäuses oder der Abdeckkappe eine umlaufende, elastische Profildichtung trägt. Die Fahrzeugleuchte läßt sich dann so im Fahrzeug-Innenraum montieren, daß die Profildichtung an der Innenfläche der Heckscheibe lichtdicht anliegt, so daß beim Aufleuchten keine Lichtstrahlen in den Innenraum des Fahrzeuges einfallen, was besonders bei Dunkelheit für die Insassen störend wäre. Zur Erleichterung des Aufstülpens der Abdeckkappe auf das Gehäuse ist vorgesehen, daß an der Innenfläche der Abdeckkappe an den einander gegenüberliegenden Seitenteilen und außen an den angrenzenden Seitenteilen des Gehäuses Positionierstege angesetzt sind.

Die Fahrzeugleuchte läßt sich besonders wirtschaftlich fertigen, wenn der Reflektor und das Gehäuse als einstückiges Formteil, vorzugsweise als einstückiges Kunststoff-Formteil ausgebildet sind. Dadurch entfällt ein Werkzeug sowie der Einbau des Reflektors in das Gehäuse. Die Reflektoroberfläche wird in bekannter Weise beschichtet.

Die Erfindung wird nachstehend anhand der beiliegenden Zeichnungen noch näher erläutert.

Es zeigen
- Figur 1: die erfindungsgemäße Fahrzeugleuchte in einer Stirnansicht mit Blick auf die Reflektorscheibe;
- Figur 2: die Fahrzeugleuchte nach der Figur 1 in einem Horizontalschnitt, längs der Linie II-II in der Figur 1;
- Figur 3: die Fahrzeugleuchte in einer Seitenansicht und
- Figur 4: die Fahrzeugleuchte in einem vertikalschnitt längs der Linie IV-IV in der Figur 1.

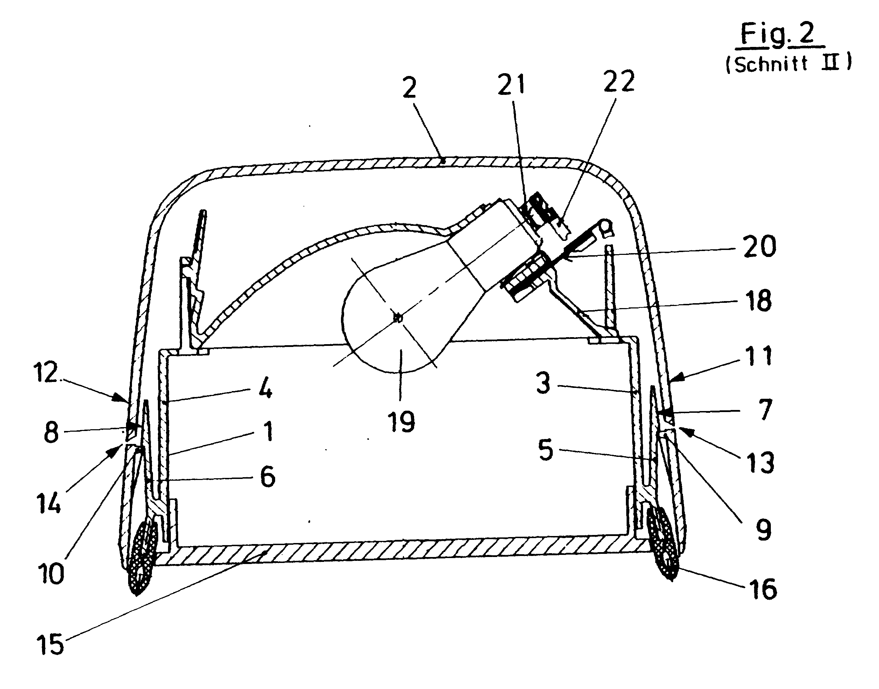

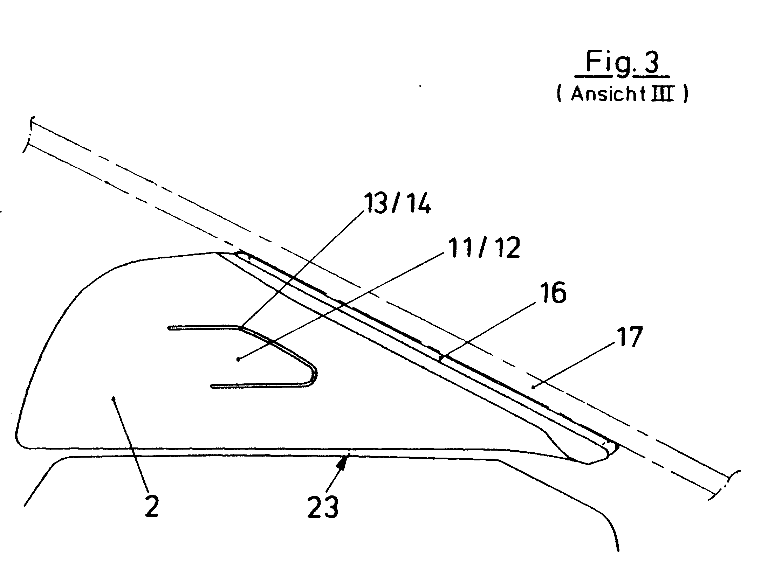

Die in Figuren dargestellte Fahrzeugleuchte beinhaltet ein keilförmiges Gehäuse 1, auf das eine Abdeckkappe 2 gestülpt ist. An den Seitenteilen 3, 4 des Gehäuses 1 sind außenseitig zwei sich gegenüberliegende Rastzungen 5, 6 angesetzt, die mit nach außen verspringenden Rastnasen 7, 8 versehen sind, die den freien Endbereich der Rastzungen 5, 6 bilden und sich zum freien Rand verjüngen. Der dem freien Rand gegenüberliegende Bereich beinhaltet die Biegeachsen der Rastzungen 5, 6. An der Abdeckkappe 2 sind innenseitig Raststege 9, 10 angeformt, die die Rastnasen 6, 7 der Rastzungen 5, 6 hintergreifen, so daß die Abdeckkappe 2 form- und kraftschlüssig festgelegt ist, da die Rastzungen 5, 6 nicht spannungsfrei sind. Die Figur 2 zeigt in Verbindung mit der Figur 3, daß in der Abdeckkappe 2 in den den Rastzungen 5, 6 zugeordneten Bereichen zwei Entriegelungslaschen 11, 12 vorgesehen sind, die durch bogenförmige Schlitze 13, 14 gebildet sind. Die freien, den Biegeachsen gegenüberliegenden Enden liegen im Verrastungsbereich der Raststege 9, 10 mit den Rastnasen 7, 8 jedoch in einem ganz geringen Abstand zu den Raststegen 9, 10. Demzufolge liegen die Biegeachsen der Rastzungen 5, 6 und der Entriegelungslaschen 11, 12 beidseitig neben den Verrastungsbereichen. Insbesondere aus der Figur 2 ergibt sich, daß durch Druck von außen auf die freien Endbereiche der Entriegelungslaschen 11, 12 die Rastnasen 7, 8 der Rastzungen 5, 6 außer Eingriff mit den Raststegen 9, 10 kommen, so daß die Abdeckkappe 2 vom Gehäuse 1 abgenommen werden kann.

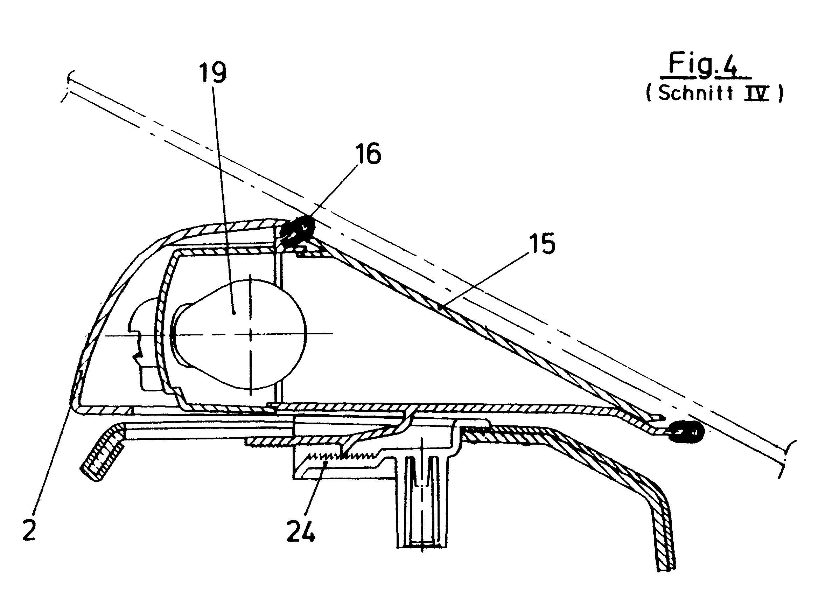

Die Fahrzeugleuchte ist mit einer den Lichtkörper bildenden Lichtscheibe 15 ausgerüstet, die in nicht näher erläuterter Weise in das Gehäuse 1 eingeclipst ist und die größere dffnung des keilförmigen Gehäuses 1 verschließt. Der an die Lichtscheibe 15 angrenzende Rand des Gehäuses 1 trägt eine umlaufende, elastische Profildichtung 16. In den Figuren 3 und 4 ist andeutungsweise die Heckscheibe 17 eines Fahrzeuges dargestellt. Die Figur 4 zeigt, daß die Profildichtung 16 an der Innenfläche der Heckscheibe 17 anliegt, so daß beim Aufleuchten keine Lichtstrahlen in das Fahrzeuginnere einfallen.

In nicht dargestellter Weise ist das Gehäuse 1 und die Abdeckkappe 2 mit Positionierstegen versehen, die an der Innenfläche der Abdeckkappe 2 und an der Außenseite des Gehäuses 1 zur Erleichterung des Aufstülpens der Abdeckkappe 2 auf das Gehäuse 1 angeformt sind. Damit dabei die Rastzungen 5, 6 durch die Raststege 9, 10 nach außen gedrückt werden, sind die Rastnasen 6, 7 an den äußeren Seiten abgeschrägt.

Im Inneren des Gehäuses 1 ist ein Reflektor 18 rastend festgelegt, der mit einer Fassung für eine Glühlampe 19 ausgerüstet ist. Im Gegensatz zur dargestellten Ausführung kann der Reflektor 18 mit dem Gehäuse 1 als ein einstückiges Kunststoff-Formteil ausgebildet sein, wobei die Reflektorfläche mit einer reflektierenden Beschichtung versehen ist.

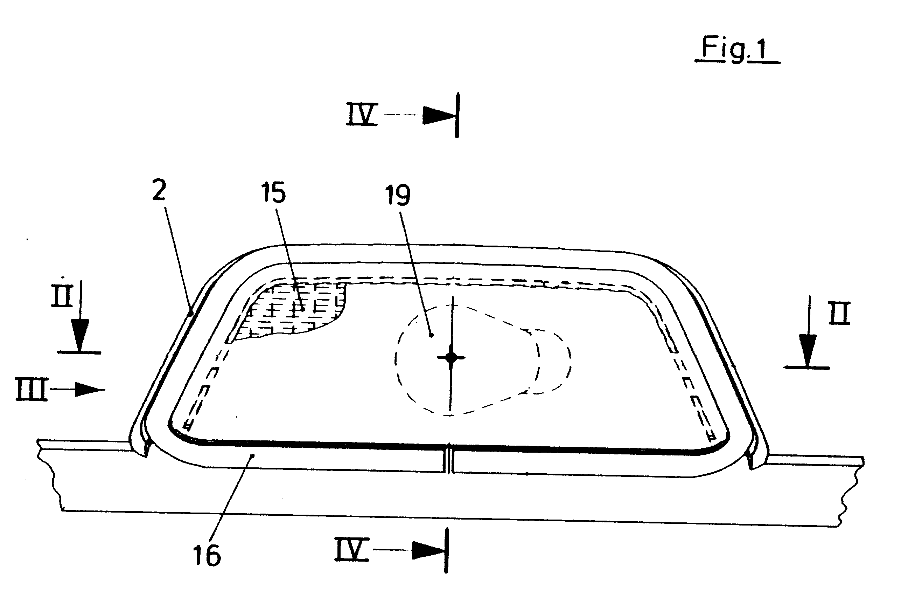

Das Gehäuse 1 ist außerdem noch mit diversen elektrischen Anschlußelementen bestückt. Durch die Bezugszeichen 20, 21 sind zwei Kontaktfedern gekennzeichnet. Durch das Bezugszeichen 22 ist eine elektrische Leitung gekennzeichnet, Aus den Figuren 1, 3 und 4 ergibt sich, daß die Fahrzeugleuchte in den keilförmigen Raum oberhalb der andeutungsweise dargestellten Hutablage 23 mittels eines nicht erläuterten Halters 24 montiert werden kann. Aus den Figuren 1 bis 4 ergibt sich, daß die Außenfläche der Abdeckkappe 2 die sichtbare Fläche der Fahrzeugleuchte bildet, wenn sie an der Hutablage 23 montiert ist. Aus der Figur 2 ergibt sich, daß nach dem Abnehmen der Abdeckkappe 2 die Glühlampe 19 einfach zu wechseln ist.

## Patentansprüche

1. Fahrzeugleuchte, insbesondere eine hochsetzbare Zusatz-Bremsleuchte, mit einem Gehäuse (1), an dem ein transparenter Lichtkörper festgelegt ist, und welches mit einer Lichtquelle (19), gegebenenfalls einem Reflektor (18) sowie elektrischen Anschlußelementen (20, 21, 22) bestückt ist, wobei auf das Gehäuse (1) eine abnehmbare Abdeckkappe (2) gestülpt ist, deren Außenfläche - bezogen auf die Einbaulage der Fahrzeugleuchte - eine Sichtfläche bildet, daß außenseitig an Seitenteilen (3, 4) des Gehäuses (1) federnde Rastzungen (5, 6) angeformt sind, die von Raststegen (9, 10) hintergriffen sind, dadurch gekennzeichnet, daß die federnden Rastzungen (5, 6) des Gehäuses (1) nach außen gerichtete Rastnasen (7, 8) aufweisen und die Raststege (9, 10) an die Innenseite der Abdeckkappe (2) angeformt sind und daß die Abdeckkappe (2) in den Rastzungen (5, 6) zugeordneten Bereichen jeweils eine Entriegelungslasche (11, 12) aufweist,
- die durch einen bogenförmigen Schlitz (13, 14) der Abdeckkappe (2) gebildet ist,
- die um eine Achse biegbar ist, zwischen der und einer Biegeachse der federnden Rastzungen (5, 6) die Rastnasen (7, 8) und die Raststege (9, 10) angeordnet sind und
- durch die bei einem Druck von außen die Rastnasen (7, 8) der federnden Rastzungen (5, 6) außer Eingriff mit den Raststegen (9, 10) gelangen.

2. Im Innenraum eines Fahrzeuges anbringbare Fahrzeugleuchte nach Anspruch 1, dadurch gekennzeichnet, daß der Lichtkörper als Lichtscheibe (15) ausgebildet ist, und daß der angrenzende Rand des Gehäuses (1) eine umlaufende, elastische Profildichtung (16) trägt.

3. Im Innenraum eines Fahrzeuges anbringbare Fahrzeugleuchte nach Anspruch 1, dadurch gekennzeichnet, daß an der Innenfläche der Abdeckkappe (2) an den einander gegenüberliegenden Seitenteilen und außen an den angrenzenden Seitenteilen (3, 4) des Gehäuses (1) Positionierstege angesetzt sind.

4. Im Innenraum eines Fahrzeuges anbringbare Fahrzeugleuchte nach Anspruch 1, dadurch gekennzeichnet, daß der Reflektor (18) und das Gehäuse (1) als einstückiges Formteil, vorzugsweise als einstückiges Kunststoff-Formteil ausgebildet sind.

## Claims

1. Vehicle lamp, more particularly a high-mountable auxiliary stoplamp, having a housing (1) on which a transparent lighting body is located and which is provided with a light source (19), if appropriate a reflector (18) and electrical connection elements (20, 21, 22), there being flanged onto the housing (1) a removable end cover (2) whose outer surface - based on the installation position of the vehicle lamp - forms a view surface, with resilient locking tabs (5, 6) moulded externally onto lateral parts (3, 4) of the housing (1), said locking tabs (5, 6) being engaged from behind by locking lands (9, 10), characterised in that the resilient locking tabs (5, 6) of the housing (1) have outwardly directed locking lugs (7, 8) and the locking lands (9, 10) are moulded onto the inside face of the end cover (2), and that in regions associated with the locking tabs (5, 6) the end cover (2) has a respective release clip (11, 12)
- which is formed by an arc-shaped slit (13, 14) in the end cover (2),
- which is adapted to bend around an axis between which and a bending axis of the resilient locking tabs (5, 6) the locking lugs (7, 8) and the locking lands (9, 10) are disposed, and
- through which when external pressure is applied the locking lugs (7, 8) of the resilient locking tabs (5, 6) become disengaged from the locking lands (9, 10).

2. Vehicle lamp adapted to be mounted in the interior of a motor vehicle, according to claim 1, characterised in that the lighting body is in the form of a lens (15) and that the adjacent edge of the housing (1) carries an all-round, elastic profiled seal (16).

3. Vehicle lamp adapted to be mounted in the interior of a motor vehicle, according to claim 1, characterised in that positioning lands are set on the inner face of the end cover (2) on the mutually opposed lateral parts and externally on the adjacent lateral parts (3, 4) of the housing (1).

4. Vehicle lamp adapted to be mounted in the interior of a motor vehicle, according to claim 1, characterised in that the reflector (18) and the housing (1) are in the form of a one-piece moulded part, preferably a one-piece plastics moulded part.

## Revendications

1. Feu de véhicule, en particulier feu de frein additionnel à montage surélevé, comportant un boîtier (1) sur lequel est fixé un corps lumineux transparent et qui est équipé d'une source lumineuse (19), le cas échéant d'un réflecteur (18) ainsi que d'éléments de raccordement électriques (20, 21, 22), un capuchon (2) amovible étant coiffé sur le boîtier (1), dont la surface extérieure - par rapport à la position de montage du feu de véhicule - forme une surface visible, et sur la face extérieure de parties latérales (3, 4) du boîtier (1) sont formées des languettes à enclenchement (5, 6) élastiques qui sont engagées par l'arrière par des barrettes d'enclenchement (9, 10), caractérisé en ce que les languettes d'enclenchement (5, 6) élastiques du boîtier (1) présentent des ergots d'enclenchement (7, 8) orientés vers l'extérieur et en ce que les barrettes d'enclenchement (9, 10) sont formées sur la face intérieure du capuchon (2) et en ce que le capuchon (2) présente dans des zones associées aux languettes d'enclenchement (5, 6) une patte de déverrouillage (11, 12) respective,
- qui est formée par une fente (13, 14) en forme d'arc du capuchon (2),
- qui est capable de fléchir autour d'un axe, les ergots d'enclenchement (7, 8) et les barrettes d'enclenchement (9, 10) étant agencés entre ledit axe et un axe de flexion des languettes d'enclenchement élastiques (5, 6), et
- au moyen de laquelle, sous une pression venant de l'extérieur, les ergots d'enclenchement (7, 8) des languettes d'enclenchement élastiques (5, 6) viennent hors d'engagement d'avec les barrettes d'enclenchement (9, 10).

2. Feu de véhicule susceptible d'être monté à l'intérieur d'un véhicule selon la revendication 1, caractérisé en ce que le corps lumineux est réalisé sous forme d'une plaque d'éclairement (15), et en ce que le bord adjacent du boîtier (1) porte un joint profilé (16) périphérique élastique.

3. Feu de véhicule susceptible d'être monté à l'intérieur d'un véhicule selon la revendication 1, caractérisé en ce que des barrettes de positionnement sont ajoutées sur la surface intérieure du capuchon (2) sur les parties latérales opposées l'une à l'autre et à l'extérieur sur les parties latérales (3, 4) adjacentes du boîtier (1).

4. Feu de véhicule susceptible d'être monté à l'intérieur d'un véhicule selon la revendication 1, caractérisé en ce que le réflecteur (18) et le boîtier (1) sont réalisés sous forme d'un élément moulé d'une seule pièce, de préférence sous forme d'un élément moulé d'une seule pièce en matière plastique.
